# EUROPEAN PATENT APPLICATION

(11) **EP 1 450 264 A2**
(43) Date of publication of application: **25.08.2004**
(21) Application number: 04000373.3
(22) Date of filing: 09.01.2004
(51) Int. Cl.: G06F 13/38

(54) **Information processing apparatus and method for controlling a transmission of image data**

(30) Priority: 07.02.2003 JP 2003030782
(71) Applicant: Kabushiki Kaisha Toshiba, Tokyo (JP)
(72) Inventor: Kakemura, Atsushi c/o Toshiba Corporation, 1-1-1, Shibaura Minato-ku Tokyo (JP)
(74) Representative: Henkel, Feiler & Hänzel

(57) **Abstract**

A wireless utility program 11 of a PDA 1 transmits image data to a wireless projector 2 by wireless communication. When a PDA 3 has sent an image-data transmission request, the wireless projector 2 sends an interrupt request to the PDA 1 by wireless communication. The wireless utility program 11 instructs the wireless projector 2 whether or not to allow shifting a transmission source that transmits the image data from the PDA 1 to the PDA 3 in response to the interrupt request.

## Description

### CROSS REFERENCE TO RELATED APPLICATION

This application is based upon and claims the benefit of priority from the prior Japanese Patent Application No. P2003-030782, filed February 7, 2003; the entire contents of which are incorporated herein by reference.

### BACKGROUND OF THE INVENTION

### 1. Field of the invention

The present invention relates to an information processing apparatus such as a portable computer and a method for controlling a transmission of image-data used in the apparatus.

### 2. Description of the Related Art

In recent years, various portable information processing apparatus such as a personal digital assistant (PDA) and portable computers of a notebook or palm type have been developed. Most of the portable information processing apparatus have a wireless communication function and can connect using the wireless communication function to other information processing apparatus and various consumer electronic devices.

As an applied system of the information processing apparatus using the wireless communication function, Japanese Patent Disclosure (Kokai) No.2002-218420 discloses an information display system in which image data transmitted from the information processing apparatus using the wireless communication function is displayed on a large screen by a projector

In the information display system of the above reference, image data stored in a storage device of the information processing apparatus is transmitted to the projector by radio waves. Thus, each presenter can easily transmit image data of his/her own information processing apparatus to the projector without cumbersome operations such as changing a cable connection between the projector and the information processing apparatus.

However, when one or more people display images from their own information processing apparatus on the screen of the projector in a conference or presentation, unrestricted changing of the information processing apparatus (e.g., laptops, PDAs) transmitting the image data to the projector hinders the smooth progress and flow of the presentation or conference.

### SUMMARY OF THE INVENTION

An embodiment of the present invention provides an information processing apparatus and method for controlling a transmission of image data which can prevent transmission sources that transmit image data to an external device such as a projector from being shifted to another information processing apparatus without limitations or restrictions.

According to an embodiment of present invention, an information processing apparatus for communicating with an external device which displays received image data, comprising: means for receiving an interrupt request from the external device during the external device is displaying the received image data from the information processing apparatus, the interrupt request indicating that the external device received an image-data presentation request from another information processing apparatus; and means, responsive to said interrupt request, for instructing the external device whether or not to allow display of image data from the other information processing apparatus.

### BRIEF DESCRIPTION OF THE DRAWINGS

The accompanying drawings, which are incorporated in and constitute a part of the specification, illustrate presently preferred embodiments of the invention, and together with the general description given above and the detailed description of the preferred embodiments given below, serve to explain the principles of the invention in which:

Fig. 1 is a block diagram for explaining the function of an information processing apparatus according to an embodiment of the present invention;

Fig. 2 is a block diagram showing a system configuration of the information processing apparatus;

Fig. 3 is a block diagram for explaining a slide-data transmission process performed by the information processing apparatus;

Fig. 4 is a view showing the relationship between slide data displayed on the information processing apparatus and slide data transmitted to a projector;

Fig. 5 is a view for explaining an interrupt function of the information processing apparatus;

Fig. 6 is a view showing a wireless utility window displayed on the display of the information processing apparatus;

Fig. 7 is a view showing a state in which the wireless utility window is minimized on the display of the information processing apparatus;

Fig. 8 is a view showing an interrupt notification window displayed on the display of the information processing apparatus;

Fig. 9 is a flowchart showing the procedure of a wireless presentation process performed by the information processing apparatus;

Fig. 10 is a flowchart showing the procedure of a process performed by the information processing apparatus when the information processing apparatus has received an interrupt request signal;

Fig. 11 is a diagram for explaining a state of communication between the information processing apparatus and the projector;

Fig. 12 is a flowchart showing another procedure of a process performed by the information processing apparatus when the information processing apparatus has received an interrupt request signal;

Fig. 13 is a view showing the information stored in a waiting-list table provided in the information processing apparatus;

Fig. 14 is a flowchart showing the procedure of a waiting-list display process performed by the information processing apparatus;

Fig. 15 is a view showing a waiting list window displayed on the display of the information processing apparatus by the waiting-list display process of Fig. 14; and

Fig. 16 is a block diagram showing a wired embodiment of the invention.

### DETAILED DESCRIPTION OF THE INVENTION

Embodiments of the invention will, be described with reference to the accompanying drawings.

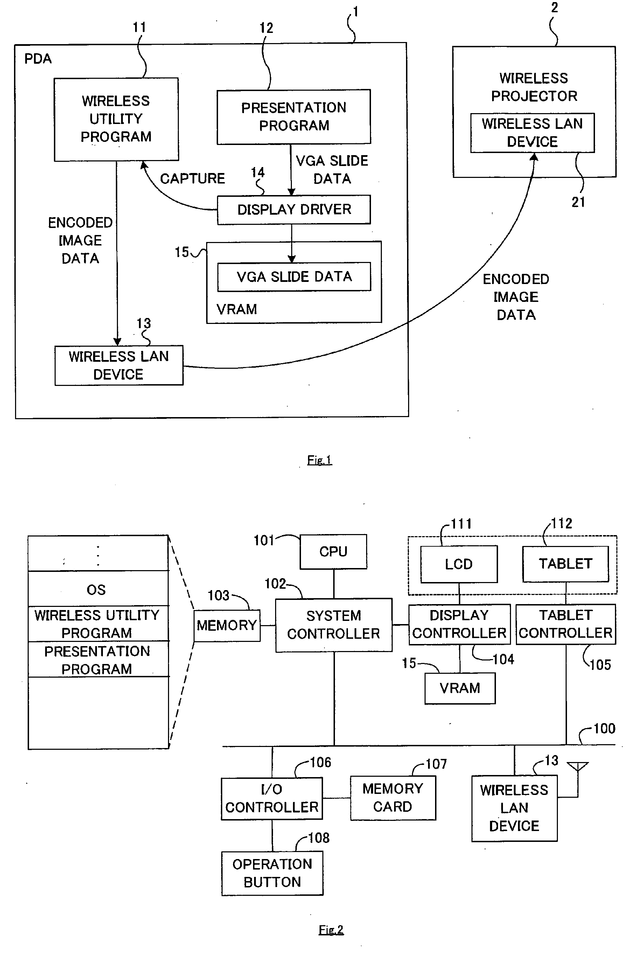

Fig. 1 shows an information processing apparatus according to an embodiment of the present invention. In the representative embodiment, the information processing apparatus is implemented as a PDA (a personal digital assistant). However, other types of information processing apparatuses may be used such as a laptop computer or other devices having wireless communications (and in some embodiments wired communications) capabilities and a presentation data storage memory. The PDA 1 is a portable information processing apparatus acting as a mobile terminal. The PDA 1 has a wireless LAN device 13. The wireless LAN device 13 is a wireless communication device constructed to perform wireless communication in accordance with, for example, IEEE 802.11a/IEEE 802.11b, and a Bluetooth standard. A wireless presentation function of the PDA 1 will be described hereinafter.

The wireless presentation function includes the function of transmitting image data to a wireless projector 2 by means of wireless communication such as radio waves to display the image data on a projector screen of the wireless projector 2. The image data includes, for example, screen image data to be displayed on the display of the PDA 1 and slide data generated by a presentation program 12. It is assumed hereinafter that the slide data generated by the presentation program 12 is transmitted to the wireless projector 2.

The presentation program 12, may, as a non-limiting example, comprisean application program for executing a slide show, by which VGA screen image data (640 × 480 in size) can be generated as slide data. The generated slide data is drawn in a video memory (VRAM) 15 through a display driver 14. Hereinafter, the slide data of VGA (640 × 480) size is referred to as VGA slide data.

When the content of the VGA slide data is to be displayed on the display of the PDA 1, the VGA slide data is converted to screen image data corresponding to the display resolution of the display of the PDA 1. The display resolution of the display is QVGA (320 × 240) that is a quarter of the resolution of the VGA slide data (640 × 480). Therefore, the screen image of the VGA slide data is reduced into 1/4 and then displayed on the display.

The wireless presentation function is implemented by using wireless. communication between the PDA 1 and the wireless projector 2. The wireless projector 2 includes a wireless LAN device 21 and a buffer for storing the VGA slide data received from the PDA 1. The wireless LAN device 21 is a wireless communication device constructed to perform wireless communication in accordance with, for example, IEEE 802.11a/IEEE 802.11b standard.

The PDA 1 has a wireless utility program 11 installed therein. The wireless utility program 11 is a program for controlling wireless presentations. The wireless utility program 11 captures the VGA slide data that is drawn in the video memory (VRAM) 15 by the presentation program 12 through the display driver 14, and transmits the captured VGA slide data to the wireless projector 2 over a wireless signal using the wireless LAN device 13.

In such a case, the updated VGA slide data is transmitted from the PDA 1 to the wireless projector 2 only when the VGA slide data to be drawn in the VRAM 15 has been updated. The updated VGA slide data is encoded by the wireless utility program 11 and then fed to the wireless LAN device 13. However, when the contents of the VGA slide data has not changed, the transmission of the VGA slide data from the PDA 1 to the wireless projector 2 is not performed.

The wireless projector 2 receives the VGA slide data via the wireless LAN device 21, and then projects an optical image corresponding to the received VGA slide data onto a large projection screen. The received VGA slide data is decoded and then written to a frame buffer in the wireless projector 2. Then the optical image corresponding to the VGA slide data stored in the frame buffer is projected onto the large projection screen. It is noted that the screen of the projector may take many forms, and may include a reflecting screen (or even a wall), or a monitor such as an LCD, plasma screen, TV-type monitor and the like.

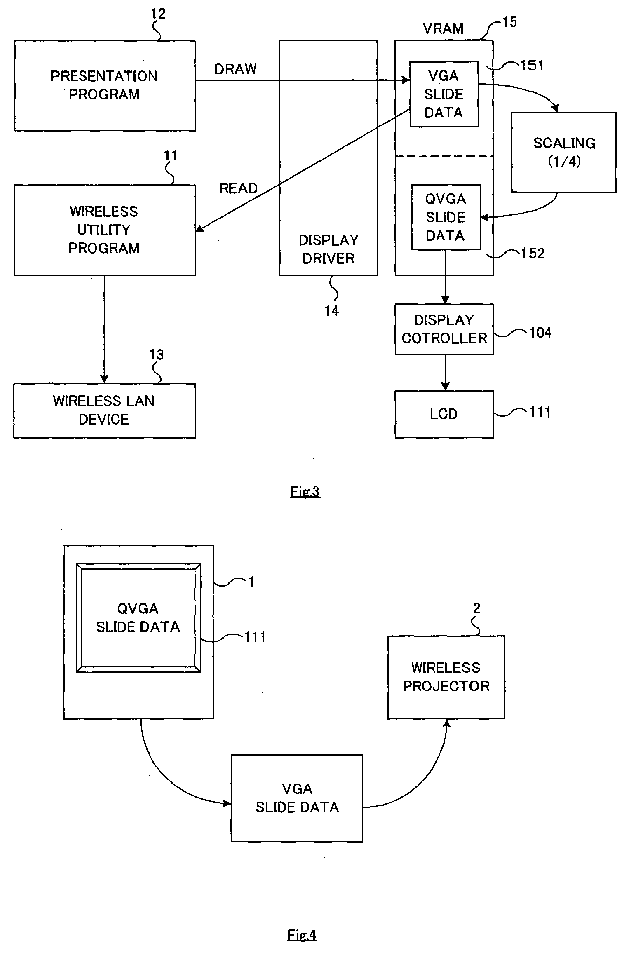

Referring to Fig. 2, the system configuration of the PDA 1 will be described. In addition to the wireless LAN device 13 and the VRAM 15, the PDA 1 includes a central processing unit (CPU) 101, a system controller 102, a memory 103, a display controller 104, a tablet controller 105, an I/O controller 106, a memory card 107, operation buttons 108, a liquid crystal display (LCD) 111, and a tablet 112.

The CPU 101 is a processor for controlling the operation of the PDA 1 and executes an operating program (OS) and various application programs/utility programs. The OS includes a tablet control function for implementing a pen input operation.

The memory 103 includes a nonvolatile memory and a random access memory (RAM). The nonvolatile memory stores the OS and the various application programs/utility programs. The RAM is used as a main memory. The nonvolatile memory also stores the wireless utility program 11 and the presentation program 12.

The system controller 102 is a bridge device for connecting a local bus of the CPU 101 and a system bus 100. The system controller 102 also includes a memory controller for controlling the memory 103. The display controller 104 controls the LCD 111 used as the display of the PDA 1 to display the screen image data drawn in the VRAM 15 on the LCD 111. The display resolution of the LCD 111 is QVGA (320 × 240) that is a quarter of the resolution of the VGA (640 × 480), as described above.

The VRAM 15 includes an on-screen area and an off-screen area. The on-screen area is a memory area for storing the screen image data of QVGA (320 × 240) in size to be displayed on the LCD 111 and is used as a frame buffer. The display controller 104 sequentially reads out the screen image data from the on-screen area and displays it on the LCD 111.

The tablet controller 105 controls the tablet 112. The tablet 112 is constructed of a transparent coordinate detecting device provided on the display screen of the LCD 111. The LCD 111 and the tablet 112 constitute a pen-input touch screen.

The I/O controller 106 controls the memory card 107 and the operation buttons 108. The memory card 107 is detachably inserted into the PDA 1. The operation buttons 108 include a plurality of operation buttons such as a power button, an application button for activating a specific application, and a cursor key.

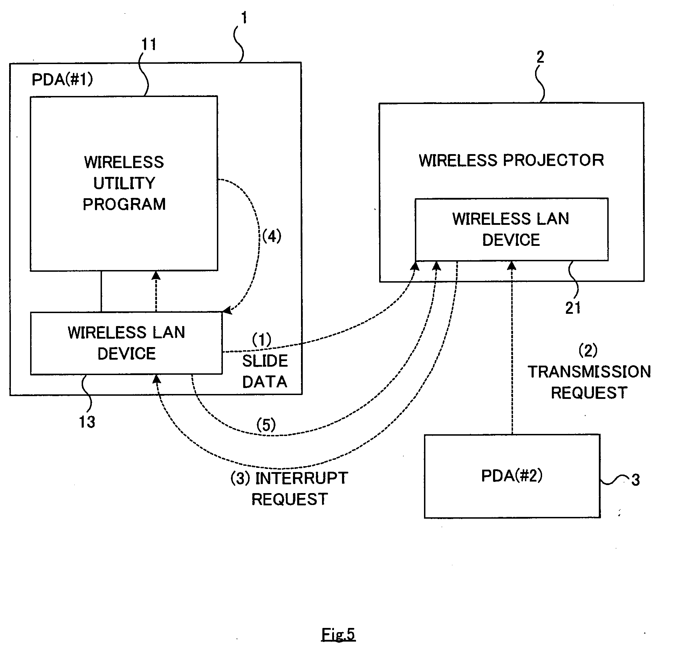

Referring to Fig. 3, the operation of transmitting the VGA slide data from the PDA 1 to the wireless projector 2 will be described. Here, it is assumed that the VGA slide data is transmitted to the wireless projector 2 while the QVGA slide data is displayed on the LCD 111.

The presentation program 12 performs a slide show for sequentially displaying a plurality of slide data on the LCD 111. In the slide show, the presentation program 12 generates VGA slide data, and then draws or writes the VGA slide data in the off-screen area 151 of the VRAM 15 through the display driver 14. The QVGA slide data to be actually displayed on the LCD 111 is generated from the screen image data constituting the VGA slide data. In such a case, a ¼ scaling process for reducing the size of the screen image data constituting the VGA slide data is preformed. Then the screen image data reduced to 1/4 is written in the on-screen area 152 of the VRAM 15 as QVGA slide data.

The scaling process is performed by the OS that controls the screen image in the on-screen area 152. Furthermore, the display controller 104 may perform the scaling process under the control of the OS.

The display controller 104 reads out the QVGA slide data from the on-screen area 152, and displays it on the LCD 111. The wireless utility program 11 reads out the VGA slide data generated by the presentation program 12 from the off-screen area 151 through the display driver 14, and transmits it to the wireless LAN device 13 as transmission data.

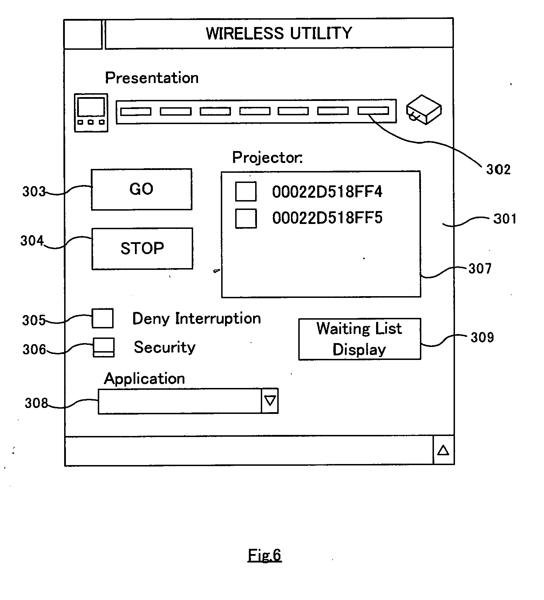

Through the above mentioned process, PDA 1 can transmit original VGA slide data used in generating the QVGA slide data to the wireless projector 2, while PDA 1 is displaying QVGA slide data on the LCD 111, as shown in Fig.4. Hence high-quality slide data displayed on the screen of the wireless projector 2 is obtained by the transmission of the VGA slide data to the wireless projector 2.

The process of transmitting the VGA slide data to the wireless projector 2 is performed whenever new VGA slide data is generated by the presentation program 12. In other words, the wireless utility program 11 monitors whether the VGA slide data is updated or not, while the PDA 1 is connected to the wireless projector 2 by wireless communication. When the wireless utility program 11 detects an update of the VGA slide data, the wireless utility program 11 transmits the updated VGA slide data to the wireless projector 2.

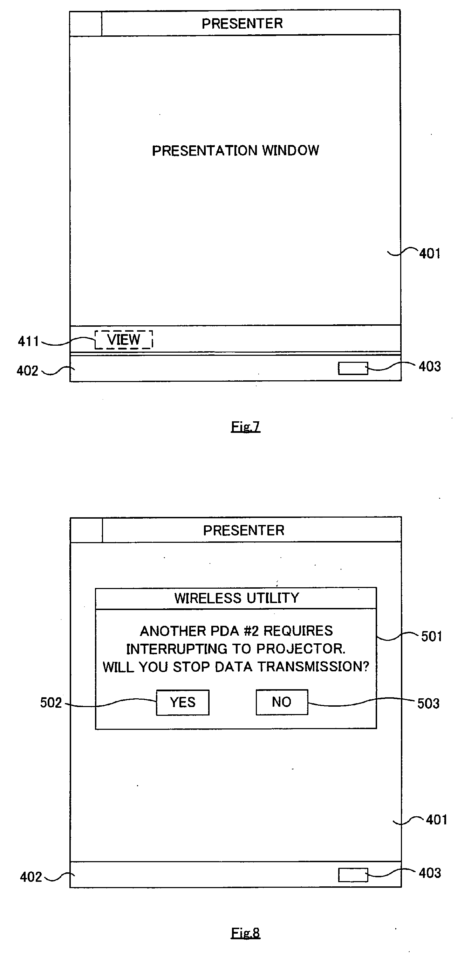

Referring to Fig. 5, an interrupt function provided to the wireless utility program 11 will be described.

The interrupt process is performed when an image-data transmission request is transmitted from another PDA 3 to the wireless projector 2 while the wireless presentation process is being performed by the PDA 1.

Through the interrupt function, the PDA 1, which is now performing the wireless presentation process, can allow the transmission source that transmits image data to the wireless projector 2 to be shifted from the PDA 1 to the PDA 3, or prevent the transmission source from being shifted from the PDA 1 to the PDA 3. How the interrupt function is performed will be described hereinafter in reference to Fig. 5, where the numbers shown in parentheses in Fig. 5 correspond to the following processes.

(1) The wireless utility program 11 of the PDA 1 establishes wireless connection with the wireless projector 2 to perform wireless presentation. The wireless utility program 11 performs the process of transmitting VGA slide data to the wireless projector 2 by wireless communications whenever new VGA slide data is ge nerated by the presentation program 12.

(2) The PDA 3 can transmit a wireless connection request to the wireless projector 2 as an image-data transmission request at anytime.

(3) When the PDA 3 has transmitted the image-data transmission request while the PDA 1 is connected to the wireless projector 2 by wireless communication, that is, while the PDA 1 is transmitting data to the wireless projector 2, an interrupt request is transmitted from the wireless projector 2 to the PDA 1 by wireless communication.

4) (5) The wireless utility program 11 of the PDA 1 receives the interrupt request during the data transmission to the wireless projector 2. The interrupt request indicates that another information processing apparatus (here, the PDA 3) has transmitted an image-data transmission request to the wireless projector 2. In response to the reception of the interrupt request, the wireless utility program 11 of the PDA 1 instructs the wireless projector 2 whether or not to allow the shift of the transmission source that transmits image data to the wireless projector 2 to another information processing apparatus that has transmitted the image-data transmission request. The instruction is transmitted from the PDA 1 to the wireless projector 2 by wireless communication as a response to the interrupt request.

The transmission source that transmits image data to the wireless projector 2 is shifted from the PDA 1 to the PDA 3 when the instruction to allow the interruption, that is, the instruction to allow the shift of the transmission sources is sent from the PDA 1 to the wireless projector 2. On the other hand, the transmission source is not shifted when the instruction of prohibition against the interrupt, that is, the instruction to deny the shift of the transmission sources is sent from the PDA 1 to the wireless projector 2. In such a case, the wireless utility program 11 of the PDA 1 can continue to transmit data to the wireless projector 2.

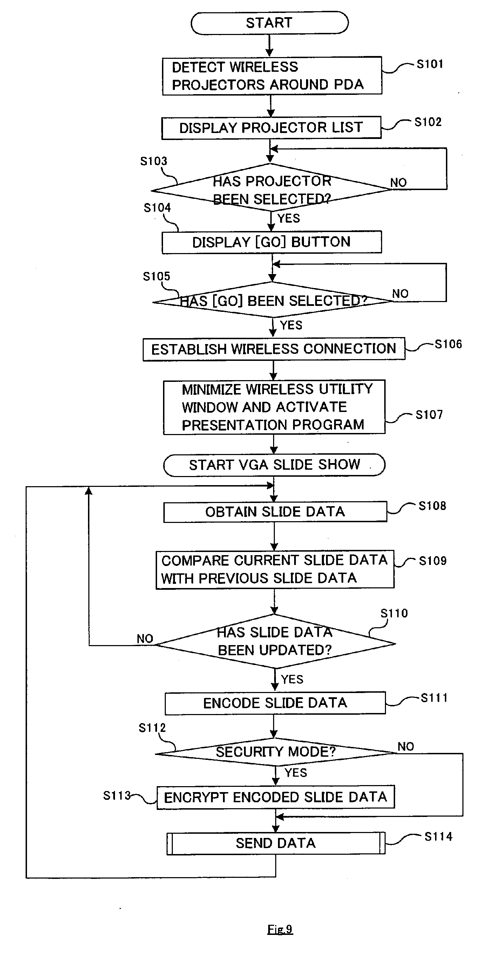

The details of a wireless presentation function provided by the wireless utility program 11 are now described. Fig. 6 shows a wireless utility window 301 displayed on the LCD 111 by the wireless utility program 11. When the user has activated the wireless utility program 11, the wireless utility window 301 in Fig. 6 is displayed on the screen of the LCD 111 of the PDA.

As shown in Fig. 6, the wireless utility window 301 has a transmission indicator 302, a [GO] button 303, a [STOP] button 304, a [Deny Interruption] check box 305, a [Security] check box 306, a projector list 307, a pull-down menu for application-selection 308, and a [Waiting List Display] button 309.

The transmission indicator 302 indicates the state of the communication between the PDA 1 and the wireless projector 2. The [GO] button 303 is a button for instructing the start of wireless presentation function for automatically transmitting slide data from the PDA 1 to the wireless projector 2. When the [GO] button 303 is tapped (clicked) by pen input, the wireless presentation function is started. The [STOP] button 304 is a button for stopping the wireless presentation function.

The projector list 307 provides the list of wireless projectors within the range of the wireless communication signal transmitted from the nearby PDAs. In other words, the projector list 307 displays the list of device-identifying information (such as a media access control (MAC) address) corresponding to an individual wireless projector detected by the wireless utility program 11.

The projector list 307 has check boxes displayed for respective wireless-projector identifying information. The user can select a destination projector to which the slide data is to be transmitted by tapping the check box. For example, in the environment in which a wireless projector is installed in each of adjacent conference rooms, the PDA 1 can communicate with each of the projectors or selected ones of the projectors. The user selects a destination projector from the projector list 307, thus preventing the slide data from being transmitted to an undesired projector. The [GO] button 303 is not displayed on the wireless utility window 301 until the destination projector is selected by the user.

The [Deny Interruption] check box 305 is used to set the wireless utility program 11 in interrupt prohibition mode. When the [Deny Interruption] check box 305 has been checked, the wireless utility program 11 operates in the interrupt prohibition mode. In the interrupt prohibition mode, the wireless utility program 11 unconditionally sends an instruction to deny the interrupt, that is, to prohibit the shift of transmission sources to the wireless projector 2, when the wireless utility program 11 has received an interrupt request. Since the interrupt request from the PDA 3 can occur at any time, the interrupt prohibitive mode is useful to ensure that control of the wireless projector 2 is retained by the PDA 1 indefinitely, not merely when data is actually being transmitted by the PDA 1 to the wireless projector 2. This operation is useful since the user of PDA 1 will often want to explain a particular slide of the slide data already transmitted but still being displayed (projected) by the wireless projector 2 and does not want to be interrupted by transmission request from other PDAs until such time as the PDA 1 user manually deselects the interrupt prohibition mode.

As a further modification of the above embodiment, the presentation program may have a time-out feature to require the user of PDA 1 to confirm the operation in the interrupt prohibition mode every selected or fixed time interval such as every 10 minutes. If the interrupt prohibition mode is not confirmed, the interrupt prohibition mode is automatically deselected, and may, in other embodiments, automatically grant permission for another PDA to take control of the wireless projector 2. This time-out feature may be useful to prevent inadvertent locking out other users of the wireless projector 2 in the event the owner of the PDA 1 leaves the room of is otherwise unable to continue his/her presentation and forgets to manually deselect the interrupt prohibition mode. As an alternative modification, the wireless projector 2 may be equipped with an override button to terminate transmission or control of the projection process by any given PDA thus permitting another PDA to take control.

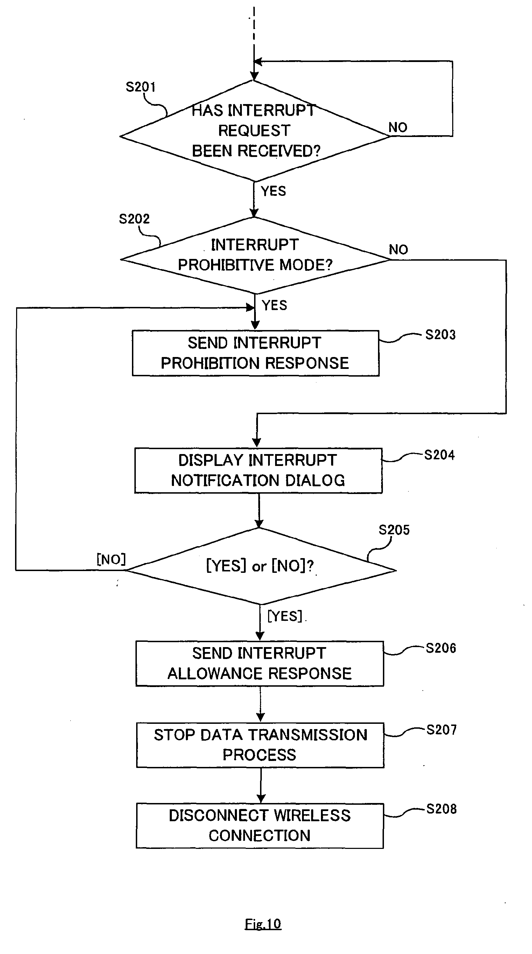

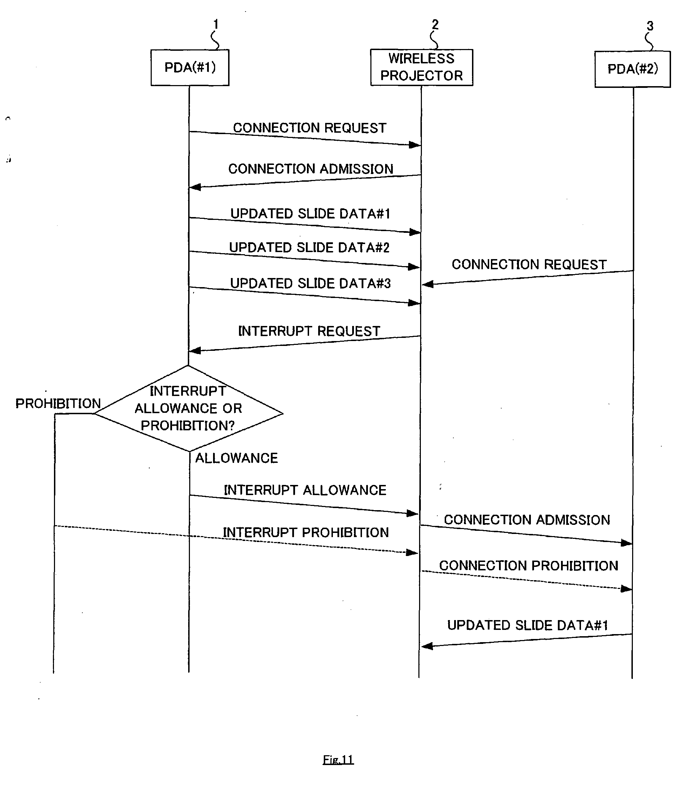

On the other hand, when the [Deny Interruption] check box 305 has not been checked, in other words, when the wireless utility program 11 has not been set in the interrupt prohibitive mode, the wireless utility program 11 displays a screen indicating the occurrence of the interrupt request (interrupt notification dialog - see Fig. 8) on the LCD 111 in response to the interrupt request, and inquires of the user of the PDA 1 about whether or not to allow the shift of the transmission sources. The wireless utility program 11 determines whether or not to allow the shift of the transmission sources in accordance with the user operation responding to the inquiry, and transmits the determination to the wireless projector 2.

The [Security] check box 306 is used for the user to make an instruction on whether or not to encrypt slide data to be transmitted. When the [Security] check box 306 has been checked by the user, the wireless utility program 11 is set to security mode. In the security mode, the slide data is encrypted and then transmitted to the wireless projector 2.

The pull-down menu for application-selection 308 is used by the user to designate a presentation program to be used in the wireless presentation function. The [Waiting List Display] button 309 is used to display the list (waiting list) of other PDAs that are waiting for allowance of the transmission of image data. Thus, when the [Deny Interruption] check box 305 is activated, any PDAs requesting access to the projector will have their identification stored in the waiting list display 309.

Referring to Fig. 7, when the [GO] button 303 is tapped by the user, the wireless utility window 301 is minimized and stored as an icon 403 in a command bar 402. At the same time, the presentation program designated in the pull-down menu for application-selection 308 is activated, and then a presentation-program operation window (presentation window) 401 is displayed on the LCD 111. The user taps a [VIEW] button 411 on the presentation window 401 to initiate the performance of a slide show of the presentation program.

When the icon 403 is selected (tapped on the PDA screed) by the user, the wireless utility window 301 is displayed again. When the [STOP] button 304 is selected, the execution of the wireless presentation function is stopped.

Fig. 8 shows an example of the interrupt notification dialog displayed by the wireless utility program 11.

When the wireless utility program 11 of the PDA 1 has received the interrupt request, an interrupt notification dialog 501 is displayed on the presentation window 401. The interrupt notification dialog 501 is used to inquire of the user of the PDA 1 about whether or not to allow the shift of the transmission source to another PDA that has required an interrupt. The interrupt notification dialog 501. displays a message such as [Another PDA requires interrupting to the projector. Will you stop data transmission?]. The utility program 11 preferably operates so as not to display the interrupt notification dialog 501 when the interrupt prohibition mode is selected.

The interrupt request can include identifying information for identifying a PDA that has sent an image-data transmission request to the wireless projector 2 (such as an MAC address assigned to the PDA). In such a case, the massage displayed on the interrupt notification dialog 501 may include the identifying information.

Furthermore, when information indicating the relationship between the user name or the device number and the MAC address of each PDA has been previously registered in the PDA 1, the user name or the device number of the PDA that has sent the image-data transmission request can be displayed as PDA-identifying information. Thus, instead of or in addition to the MAC address being displayed, a name of the user of the requesting PDA, such as Mr. Suzuki, will be displayed.

The interrupt notification dialog 501 further includes a [YES] button 502 and a [NO] button 503. When the [YES] button 502 has been selected by the user, the wireless utility program 11 sends an instruction to allow the shift of transmission sources to the wireless projector 2, and then the data-transmission process performed by the PDA 1 is stopped. When the [NO] button 503 is selected by the user, the wireless utility program 11 transmits an instruction to prohibit the shift of transmission sources to the wireless projector 2, and the data-transmission process (or control process) of the PDA 1 is continued.

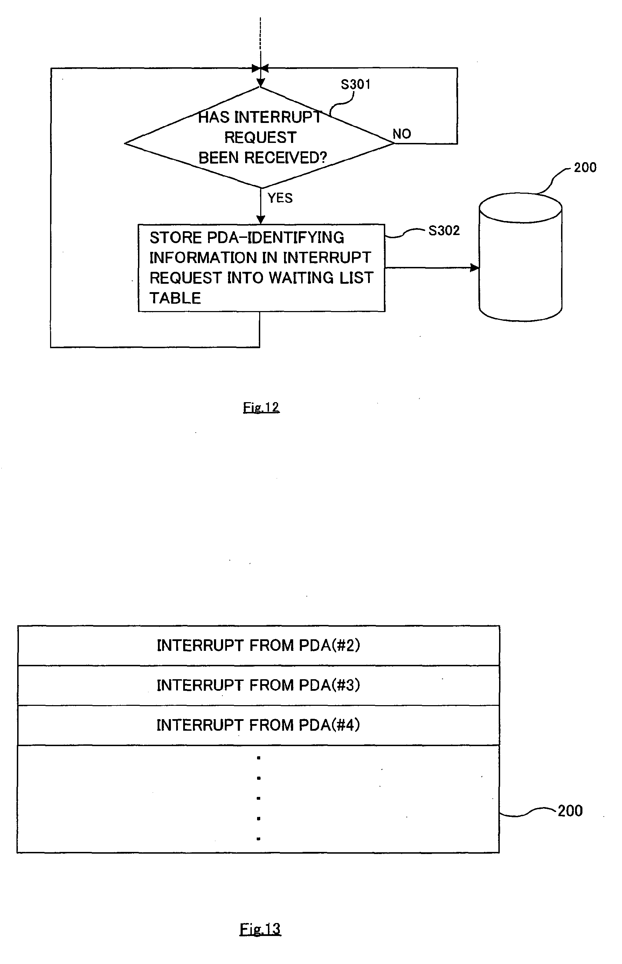

Referring now to a flowchart of Fig. 9, the procedure of the wireless presentation process performed by the wireless utility program 11 is described.

When the wireless utility program 11 is activated, the wireless utility program 11 displays the wireless utility window 301 and then detects wireless projectors existing around the PDA 1 (step S101). In step S101, a device discovery process for detecting a device capable of communicating with the PDA 1 is performed.

Specifically, the wireless utility program 11 of PDA 1 broadcasts a device discovery command using the wireless LAN device 13 and then waits for a response to the device discovery command. Each wireless projector 2 that has received the device discovery command returns a response including a MAC address assigned to its own wireless LAN device 21 and an identifier indicating its own device type (for example, projector) to the PDA 1. The PDA 1 receives these responses and the wireless utility program 11 detects all of the wireless projectors existing within the transmission range of the PDA 1.

The wireless utility program 11 displays the list of the detected wireless projectors on the projector list 307 (step S102). When one wireless projector on the projector list 307 has been selected by the user (YES in step S103), the wireless utility program 11 displays the [GO] button 303 on the wireless utility window 301 (step S104).

When the [GO] button 303 is selected by the user (YES in step S105), the wireless utility program 11 sends a connection request as an image-data transmission request to the wireless projector 2 selected from the projector list 307, and establishes a wireless connection with the selected wireless projector 2 (step S106). In step S106, not only the physical wireless link between the PDA 1 and the selected wireless projector 2, but also the session between is established.

After the wireless connection with the wireless projector 2 has been established, the wireless utility program 11 minimizes the wireless utility window 301 and activates the presentation program 12 (step S107). The activated presentation program 12 starts a slide show (VGA slide show) for sequentially writing the VGA slide data in the off-screen area 151 of the VRAM 15.

The wireless utility program 11 obtains the VGA slide data from the off-screen area 151 of the VRAM 15 (step S108). In step S108, the wireless utility program 11 issues a command to require reading of screen-image data from the off-screen area 151 of the VRAM 15 to the display driver 14. The display driver 14 reads out the screen-image data from the off-screen area 151 through the display controller 104, and then passes it to the wireless utility program 11.

The wireless utility program 11 compares the newly obtained screen-image data with the screen-image data that was sent last time in step S114, which will be described later. As a result of the comparison, the wireless utility program 11 determines whether or not the VGA slide data has been updated (steps S109 and S110).

When the screen-image data obtained in step S108 is different from the screen-image data that was sent last time, it is recognized that the presentation program 12 has updated the VGA slide data, that is, the presentation program 12 has generated new VGA slide data. In such a case, it is determined that the screen-image data that has been newly obtained in step S108 is data to be transmitted (that is, updated VGA slide data).

The VGA slide data, that is first obtained after the [GO] button 303 has been pushed, is unconditionally determined to be updated VGA slide data. The process of obtaining the VGA slide data (step S108) and the process of determining whether the obtained VGA slide data is different from the VGA slide data that was sent last time (steps S109 and S110) are repeated at regular intervals.

When it has been determined that the obtained VGA slide data is the data to be transmitted (updated VGA slide data) (YES in step S110), the wireless utility program 11 codes the obtained VGA slide data (step S111) for facilitating transmission thereof by means of data compression. Subsequently, the wireless utility program 11 determines whether or not the security mode has been selected (step S112). When the security mode has been selected (YES in step S112), the wireless utility program 11 encrypts the coded VGA slide data (step S113), and transmits it to the selected wireless projector 2 using the wireless LAN device 13 (step S114).

Thus, encrypting the VGA slide data after coding it reduces the size of data to be encrypted. The key used for encryption can be generated by authentication and key exchange between the PDA 1 and the wireless projector 2 connected thereto.

When the operation mode of the wireless LAN device 13 is set in a mode using a wired equivalent privacy (WEP) key, encryption using the WEP key is performed in step S114. In such a case, the VGA slide data is encrypted twice by two kinds of encryption processes in steps S 113 and S114. When the security mode has not been selected (NO in step S112), the process of step S113 is skipped.

The wireless connection between the PDA 1 and the wireless projector 2 is maintained until the user selects the [STOP] button 304. While the wireless connection is maintained, the processes of steps S108 to S114 are repeated.

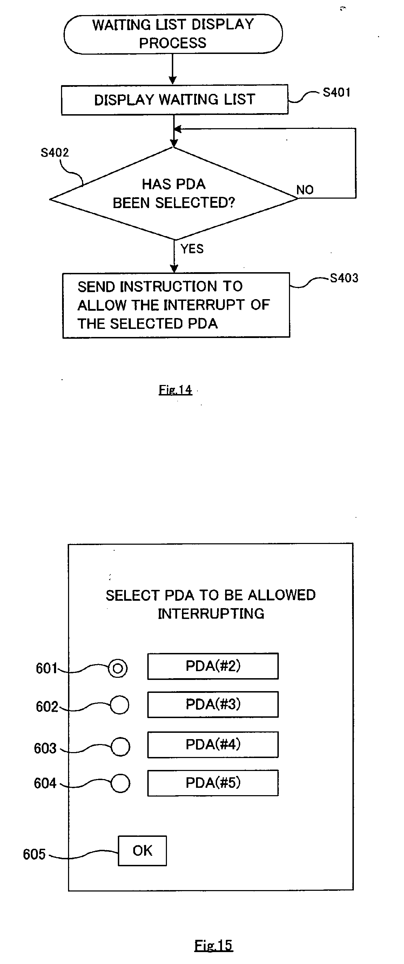

Referring next to Fig. 10, the procedure performed by the wireless utility program 11 in.response to the interrupt request will be described.

When the wireless utility program 11 of the PDA 1 receives an interrupt request from the wireless projector 2 during the data transmission process in steps S108 to S114 (YES in step S201), the wireless utility program 11 determines whether or not the interrupt prohibitive mode has been selected (step S202).

When the interrupt prohibition mode has been selected (YES in step S202), the wireless utility program 11 sends a response indicating the prohibition of the interrupt, that is, the prohibition of shifting of transmission sources to the wireless projector 2 by wireless communication, thereby immediately instructing the wireless projector 2 to prohibit the interrupt (step S203).

On the other hand, when the interrupt prohibition mode has not been selected (NO in step S202), the wireless utility program 11 displays the interrupt notification dialog 501 in Fig. 8 on the LCD 111, and thus notifies the user of the PDA 1 that an interrupt request has been generated and inquires of the user about whether or not to allow the interrupt (step S204). The wireless utility program 11 waits for the user to select the [YES] button 502 or the [NO] button 503 (step S205).

When the [NO] button 503 has been selected, the wireless utility program 11 sends an interrupt prohibitive response, that is, the prohibition of the shift of transmission sources to the wireless projector 2 by wireless communication, thereby instructing the wireless projector 2 to prohibit the interrupt (step S203).

When the [YES] button 502 is selected, the wireless utility program 11 sends an interrupt allowable response, that is, a response indicating the allowance of the shift of transmission sources to the wireless projector 2 by wireless communication, thereby instructing the wireless projector 2 to allow the interrupt (step S206).

The wireless utility program 11 stops the data transmission process of automatically transmitting updated slide data whenever slide data is updated (step S207), and thereafter sends a disconnection request to the wireless projector 2 by wireless communication, thereby disconnecting the wireless connection between the PDA 1 and the wireless projector 2 (step S208).

Thus, the transmission source that transmits image data to the wireless projector 2 is shifted from the PDA 1 to another PDA 3 that has sent the image-data transmission request. The PDA 3 is connected to the wireless projector 2 by wireless communication, so that the PDA 3 can start the wireless presentation function, that is, the data-transmission process of automatically transmitting updated slide data whenever slide data is updated.

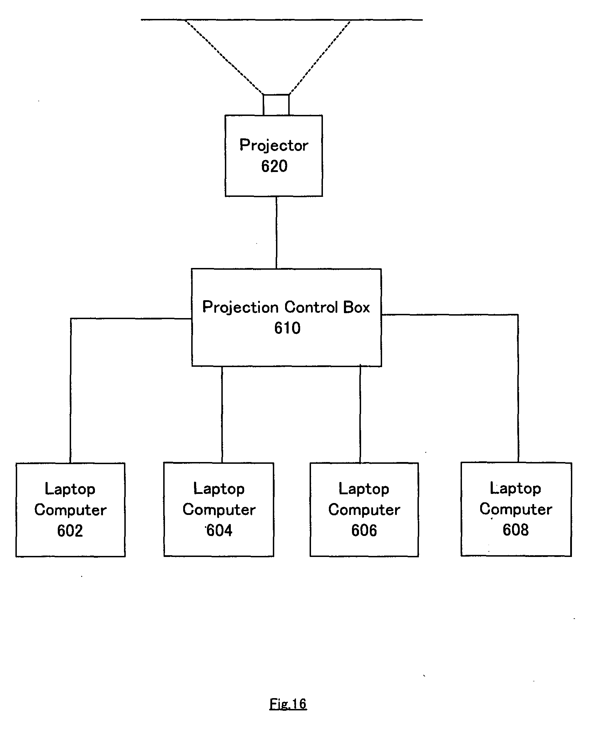

Referring next to Fig. 11, communication between the two PDAs 1 and 3 and the wireless projector 2 will be described. Here, it is assumed that the PDA 3 (PDA #2) has sent an image-data transmission request to the wireless projector 2 while the PDA 1 (PDA #1) is performing the wireless presentation function.

When the [GO] button 303 displayed on the LCD 111 of the PDA 1 has been selected, the PDA 1 sends a connection request to the wireless projector 2 as an image-data transmission request. When there is no device that is transmitting image data to the wireless projector 2 (or in other embodiments when there is further no PDA which has selected the interrupt prohibition mode), a notification of connection admission is given to the PDA 1 from the wireless projector 2. When the PDA 1 has been notified of the connection admission from the wireless projector 2, wireless connection between the PDA 1 and the wireless projector 2 is established.

The presentation program 12 of the PDA 1 is activated, and starts a slide show. The wireless utility program 11 of the PDA 1 automatically transmits updated VGA slide data to the wireless projector 2 by wireless communication whenever the presentation program 12 writes new VGA slide data in the VRAM 15.

Here, it is assumed that a [GO] button displayed on an LCD of the PDA 3 has been tapped. The PDA 3 sends a connection request to the wireless projector 2 as an image-data transmission request in response to the selection of the [GO] button. Since the PDA 1 is in the middle of the process of transmitting image data to the wireless projector 2, the wireless projector 2 sends an interrupt request to the PDA 1 by wireless communication.

Furthermore, in other embodiments of the invention, a message is sent from the wireless projector 2 to the PDA 3 indicating that there already is a device that is currently transmitting image data to the wireless projector 2. This message is sent before the interrupt request is transmitted to the PDA 1 by wireless communication, thereby inquiring of the user of the PDA 3 about whether or not to cancel the connection request. When the connection request has been cancelled by the user of PDA 3, there is no need to send the interrupt request to the PDA 1.

When the wireless utility program 11 of the PDA 1 has received the interrupt request, the wireless utility program 11 determines whether or not to allow an interrupt, and instructs the wireless projector 2 whether or not to allow the interrupt according to the determination.

When the wireless utility program 11 of the PDA 1 allows the interrupt, the wireless projector 2 notifies PDA 3 of connection admission. The wireless utility program of the PDA 3 can then start a wireless presentation process.

On the other hand, when the wireless utility program 11 of the PDA 1 prohibits an interrupt, the wireless projector 2 notifies the PDA 3 of the connection prohibition. Therefore, the connection request from the PDA 3 is rejected. In this case, the wireless utility program of the PDA 1 can continue the wireless presentation process.

In the above description, it has been assumed that the PDA 1 instructs the wireless projector 2 whether or not to allow an interrupt at the time of the reception of the interrupt request. However, in other embodiments identifying PDA information of a requesting PDA is stored in the PDA 1 and identifying information of several PDAs may be so stored when multiple PDA users want access to the wireless projector 2. Each of these PDAs has thus sent an image-date transmission request to the wireless projector 2. In such a case the user of PDA 1 selects a PDA from the list and the selected PDA is allowed to interrupt PDA 1 and start transmitting image data to the wireless projector 2.

Referring to Figs. 12 to 15, the process of selecting the PDA which is allowed to interrupt PDA 1 from the list of the PDAs that have sent a connection request (image-data transmission request) is described as a second embodiment of the invention. Fig. 12 is a flowchart of the procedure of storing PDA identifying information designated by the interrupt request.

When the wireless utility program 11 has received an interrupt request sent from the wireless projector 2 (YES in step S301), the wireless utility program 11 extracts PDA identifying information included in the interrupt request and stores the extracted PDA identifying information (such as a device number, common or assigned name) in a waiting-list table 200 (step S302).

The process of step S302 is executed whenever the interrupt request is received. The wireless utility program 11 does not send the instruction on whether or not to allow the interrupt to the wireless projector 2 at this point of time. The PDAs that have sent the connection request (image-data transmission request) are in a waiting mode and are waiting for a notification of connection admission.

For example, when three PDAs with device numbers #2, #3, and #4 send a connection request (image-data transmission request) to the wireless projector 2, the respective device numbers #2, #3, and #4 of the three PDAs are stored in the waiting-list table 200, as shown in Fig. 13.

The flowchart of Fig. 14 shows the selection process of selecting a PDA from the stored list of waiting PDAs.

When the [Waiting List Display] button 309 on the wireless utility window 301 has been tapped, the wireless utility program 11 of the PDA 1 displays the list of device numbers stored in the waiting-list table 200 as a waiting list window on the LCD 111 (step S401). Fig. 15 shows an example of the waiting list window.

Referring to Fig. 15, the waiting list window shows the list of PDAs that have sent a connection request (image-data transmission request) to the wireless projector 2 during the process of transmitting data from PDA 1. The respective PDA identifying information of the PDAs that sent a connection request is displayed in the list.

For example, when four PDAs with device numbers #2, #3, #4, and #5 have sent a connection request (image-data transmission request) to the wireless projector 2, the respective PDA identifying information of the four PDAs, such as device numbers #2, #3, #4, and #5, is displayed on the waiting list. The waiting list further displays radio buttons 601 to 604 corresponding to the device numbers #2, #3, #4, and #5. The user taps one of the radio buttons 601 to 604 to thereby select one PDA which is allowed to interrupt. Then an [OK] button 605 on the waiting list has been tapped, so the one selected PDA which is allowed to interrupt is determined.

When the PDA which is allowed to interrupt has been selected in this way (YES in step S402), the wireless utility program 11 of the PDA 1 sends an instruction to allow the interrupt of the selected PDA to the wireless projector 2 (step S403). The instruction includes information indicating that an interrupt is allowed and PDA identifying information corresponding to the selected PDA. The wireless projector 2 sends a connection admission to a PDA designated by the PDA identifying information sent from the PDA 1.

In the above-described embodiments, slide data generated by the presentation program 12 is transmitted to the wireless projector 2. However, screen image data displayed on the LCD 111 may be also sent to the wireless projector 2 by capturing the screen image data. Also in the process of transmitting screen image data, only updated screen image data may be sent to the wireless projector 2 by determining whether or not the screen image data has been updated.

While embodiments of the invention have been described in relation to wireless information processing apparatuses and a wireless projector, other embodiments of the invention may utilize wired connections between a plurality of information processing apparatuses such as, for example, wire connected laptop computers, and a projector. In this embodiment, the plurality of laptop computers are connected by wire to the projector (or a projector box interface as detailed below) and the presentation is again controlled by say a first of the computers with other computers required to request interruption in a similar manner as explained above. Again, the first computer is programmed to deny or permit interruption or may automatically always prohibit interruption in an interrupt inhibition mode. Essentially all of the procedures set forth above for the wireless system may be practiced with a wired system.

As yet further modifications of the described embodiments, the projector may be provided with a sufficiently large buffer so as to store an entire presentation or multiple presentations of multiple users. Thus, even while information processing apparatus 1 (computer or PDA, for example) is in control of the projector, the other information processing apparatuses may transmit their own presentation data to the projector for storage therein. However, the display of the other presentations from other information processing apparatuses must still be preceded by a request for presentation (as opposed to a request for transmission) and the first information processing apparatus is programmed, in response to the request for presentation, to (1) display an inquiry screen so that the user of the first information processing apparatus may permit or inhibit the request for presentation of another information processing apparatus or (2) in a interrupt inhibition mode, to automatically inhibit any other information processing apparatus (in the case where the image data has not been transferred to the projection buffer or the buffer of the projection interface or control circuit) or to inhibit the projector from displaying the presentation of any other information processing apparatus (in the case where the image data has already been transferred to the buffer of the projector or the buffer of the projector interface or control circuit).

In implementing the above described wired embodiment of the invention, reference is made to Fig. 16 in which laptop computers 602-608 are connected to a projector interface or control box 610 which is in turn connected to a conventional projector 620. The projector control box 610 is configured to have a plurality of input terminals for receipt of the wired output of the laptop computers 602-608 and contains an output terminal which is fed to the input of projector 620. Thus, the conventional projector sees the input thereto as if it were a normal input directly from any one of the computers 602-608. The projector control box 610 also contains a CPU, buffer storage, switching circuitry and i/o interface units to permit communication with the computers 602-608 and projector 620 and to permit storage of presentation files. The switching circuitry may be used to electronically switch (via a selector or multiplexer) the inputs of the buffer to be fed by each of the connected computers 602-608 so that the presentation data of each of the computers may be stored in the memory. If the buffer is large enough, the buffer may be used to store the presentation of plural computers even while the presentation material of a first computer is being displayed. In this way, the second computer's presentation material need not be delayed in waiting for downloading of its material to the projector control box buffer. All identifying and control signals, including the presentation request signals and signals for the prohibit and allowance of interrupts are transmitted by wire between the projector control box 610 and the computers 602-608. The utility programs and presentation windows and operational flowcharts for the wired system follow the corresponding description of the wireless system as previously described in detail.

Additional advantages and modifications will readily occur to th ose skilled in the art. Therefore, the invention in its broader aspects is not limited to the specific details, representative devices, and illustrated examples shown and described herein. Accordingly, various modifications may be made without departing from the spirit or scope of the general invention concept as defined by the appended claims and their equivalents.

## Claims

1. An information processing apparatus for communicating with an external device which displays received image data, comprising:
means for receiving an interrupt request from the external device during the external device is displaying the received image data from the information processing apparatus, the interrupt request indicating that the external device received an image-data presentation request from another information processing apparatus; and
means, responsive to said interrupt request, for instructing the external device whether or not to allow display of image data from the other information processing apparatus.

2. An information processing apparatus according to claim 1, further comprising means, responsive to said interrupt request, for inquiring of the user of the information processing apparatus about whether or not to allow display of image data from the other information processing apparatus before instructing the external device whether or not to allow display of image data from the other information processing apparatus.

3. An information processing apparatus according to claim 2, further comprising means for setting the operation mode of the instruction means to either one of a first mode for performing an inquiry by the inquiring means and a second mode for instructing the external device to automatically prohibit the display of image data from the other information processing apparatus without an inquiry to said user of the information processing apparatus.

4. An information processing apparatus according to claim 1, further comprising:
means for storing information for identifying the other information processing apparatus designated by the interrupt request whenever the interrupt request is received by the receiving means;
means for displaying the list of the stored identifying information on a display of the information processing apparatus; and
means for selecting one identifying information from the list as the next display source.

5. An information processing apparatus according to claim 4, wherein the instruction means includes means for transmitting to the external device the information to allow shifting the source of the image data to correspond to the selected next display source.

6. A method for controlling the display of image data transmitted from an information processing apparatus to an external device which displays received image data, comprising the steps of:
transmitting image data displayed by the external device to the external device;
receiving an interrupt request from the external device during the external device is displaying the received image data from the information processing apparatus, the interrupt request indicating that the external device received an image-data presentation request from another information processing apparatus; and
in response to the interrupt request, instructing the external device whether or not to allow display of image data from the other information processing apparatus.

7. A method for controlling the transmission of image data according to claim 6, further including, in response to the interrupt request, inquiring of the user of the information processing apparatus about whether or not to allow display of image data from the other information processing apparatus before instructing the external device whether or not to allow display of image data from the other information processing apparatus.

8. A method for controlling the transmission of image data according to claim 7, further comprising the step of setting the operation mode of the instruction step to either one of a first mode for performing an inquiry of the inquiring step and a second mode for instructing the external device to automatically prohibit the display of image data from the other information processing apparatus without an inquiry to said user of the information processing apparatus.

9. A method for controlling the transmission of image data according to claim 6, further comprising the steps of:
storing information for identifying the other information processing apparatus designated by the interrupt request whenever the interrupt request is received in the receiving step;
displaying the list of the stored identifying information on the display of the information processing apparatus; and
selecting one identifying information from the list as the next display source.

10. A method for controlling the transmission of image data according to claim 9, wherein the instructing step includes the step of transmitting the information instructing the shifting the display source and the selected identifying information to the external device, when the one identifying information is selected in the selecting step.
